# EUROPEAN PATENT SPECIFICATION

(11) **EP 1 519 010 B1**
(45) Date of publication and mention of the grant of the patent: **21.06.2006**
(21) Application number: 04077224.6
(22) Date of filing: 03.08.2004
(51) Int. Cl.: F01D 11/00, F16J 15/44

(54) **Outer air seal assembly**
Äussere Luftabdichtungsanordnung
Joint externe d'étanchéité à l'air

(30) Priority: 25.09.2003 US 671291
(43) Date of publication of application: 30.03.2005
(73) Proprietor: Siemens Power Generation, Inc., Orlando FL 32826-2399 (US)
(72) Inventor: Liang, George, 34990 Palm City, FL (US)
(74) Representative: Hazzard, Alan David

(56) References cited:
- EP-A- 0 657 625
- EP-A- 1 033 477
- EP-A- 1 245 876
- GB-A- 2 356 022
- PATENT ABSTRACTS OF JAPAN vol. 0071, no. 73 (M-232), 30 July 1983 (1983-07-30) -& JP 58 077973 A (HITACHI SEISAKUSHO KK), 11 May 1983 (1983-05-11)

## Description

### FIELD OF THE INVENTION

This invention relates generally to the field of internal to combustion engines and, more particularly, to an outer air seal having leakage-reducing and cooling-enhancing features.

### BACKGROUND OF THE INVENTION

Combustion engines are machines that convert chemical energy stored in fuel into mechanical energy useful for generating electricity, producing thrust, or otherwise doing work. These engines typically include several cooperative sections that contribute in some way to the energy conversion process. In gas turbine engines, air discharged from a compressor section and fuel introduced from a fuel supply are mixed together and burned in a combustion section. The products of combustion (also referred to as the working gas or working fluid) are harnessed and directed through a turbine section, where they expand and turn a central rotor shaft. The rotor shaft may, in turn, be linked to devices such as an electric generator to produce electricity.

To increase the power production capacity of gas turbine engines, efforts are often made to maximize the amount of energy extracted by the turbine section. A number of strategies have been developed to help in this regard. One strategy is to operate the combustion section at an elevated temperature, typically near the operational limits of the engine components, to impart large amounts of potential energy to the working fluid. Another strategy includes employing seals to increase engine efficiency by reducing leakage of working fluid into non-energy-converting portions of the engine. In yet another strategy, the design of the turbine section fluid guide components, such as blades and vanes, may be optimized to produce high-yield interaction between the components and the working fluid. Each of these strategies has advantages and disadvantages, and the strategies may be combined to fit various situations and operating conditions.

In situations where turbine section seals are used, a variety of difficulties may be encountered. For example, to accommodate the growth and shrinkage produced by temperature cycling during engine operation, seals often fit loosely during low-load operating conditions and allow leakage in all but the most extreme environments. Turbine seals may also store heat, producing unwanted increases in engine cooling requirements and actually reducing engine efficiency.

EP 1033477 describes a cylindrical split ring (for a gas turbine) formed of segments having flanges with bent surfaces. The segments are coupled together to form the split ring and the bent surface on adjacent segments cooperate to form a groove. Notches in the segments accommodate a seal plate for the groove. Accordingly, there remains a need in this field to improve seal performance.

GB2356022 describes another liner structure (for a gas turbine) that is formed of segments having cooperating edges which define a gap. The arrangement includes a sealing strip in the gap.

EP0657625 describes a seal for a gas turbine comprised of arcuate seals spaced apart to define inclined intersegment gaps. The segments have cooling passages discharging into the gaps and a sealing plate is included.

### SUMMARY OF THE INVENTION

The present invention is an outer air seal assembly having the features set out inclaim 1 appended hereto.

Other advantages of this invention will become apparent from the following description taken in conjunction with the accompanying drawings wherein are set forth, by way of illustration and example, certain embodiments of this invention. The drawings constitute part of this specification and include exemplary embodiments of the present invention and illustrate various objects and features thereof.

### BRIEF DESCRIPTION OF THE DRAWING

Fig. 1 is a side plan view of an engine using the outer air seal of the present invention;
Fig. 2 is an end view of the outer air seal of the present invention in use within the engine turbine section shown in Fig.1;
Fig. 3 is a partial elevation view of two cooperating boundary members of the present invention; and
Fig. 4 is partial plan view of the boundary members shown in Fig. 3, with no blocking panel installed.

### DETAILED DESCRIPTION OF THE INVENTION

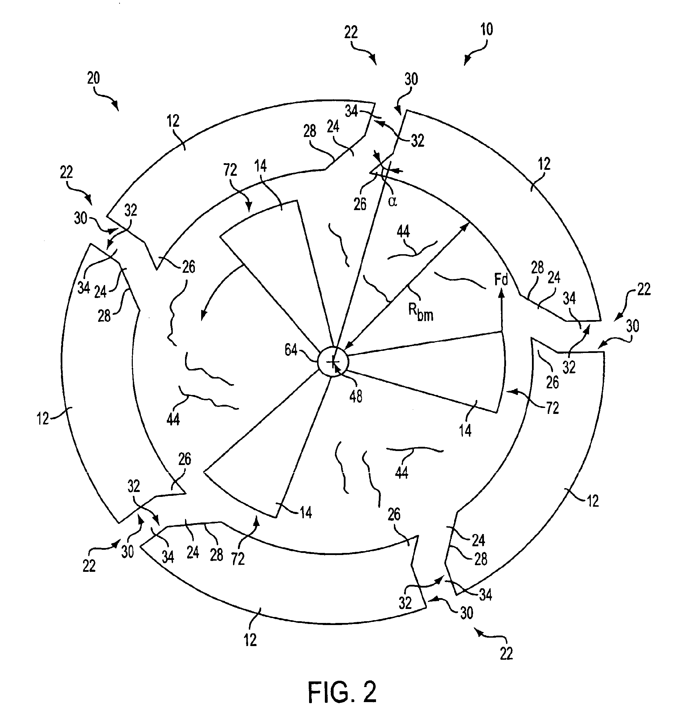

Reference is made to the Figures, generally, in which an outer air seal 10 according to the present invention is shown. By way of overview, the seal 10 includes a set 20 of boundary members 12 grouped in a ring-shaped arrangement to prevent leakage within the turbine section 16 of an associated gas turbine engine 18. Each boundary member 12 is separated from adjacent boundary members by interface gaps 22 formed therebetween. The interface gaps 22 allow contraction and expansion of individual boundary members 12, as well as relative motion between the boundary members, collectively, during operation. The interface gap 22 includes a radially-skewed portion 24 formed by angled portions 26,28 of cooperating, adjacent boundary member interface edges 30,32. The interface gap 22 also includes a radially-aligned portion 34, and one or more partition members 36 extend into the interface gap 22 to form a serpentine-shaped pathway 38 within the gap not shown in figure 2. Cooling fluid conduits 40 disposed within the boundary members 12 provide a pathway for cooling fluid 42 to enter the interface gap 22, thereby providing supplemental cooling without reducing engine operating efficiency. It is noted that while the outer air seal 10 is described in the context of an industrial gas turbine engine 18, and specifically within an engine turbine section 16, the seal will provide benefits in other settings, including other stationary interfaces such as inter-vane interfaces and end wall to downstream component interfaces, as well. Furthermore, as a matter of convention, rotation of blades 14 will be shown as occurring in a counter-clockwise fashion during operation of the reference engine 18. Clockwise rotation is possible, however, and in settings with clockwise rotation, the various aspects of the invention would be achieved most-effectively if the orientation of the radially-skewed portion 24 of the interface gap 22 is commensurately reversed from that shown and described herein. Additionally, in the context of counter-clockwise rotation, the terms "rotationally-upstream" and "rotationally-downstream" shall refer to locations that are displaced, respectively, clockwise and counter-clockwise from a given reference point. The outer air seal 10 of the present invention will now be described in detail.

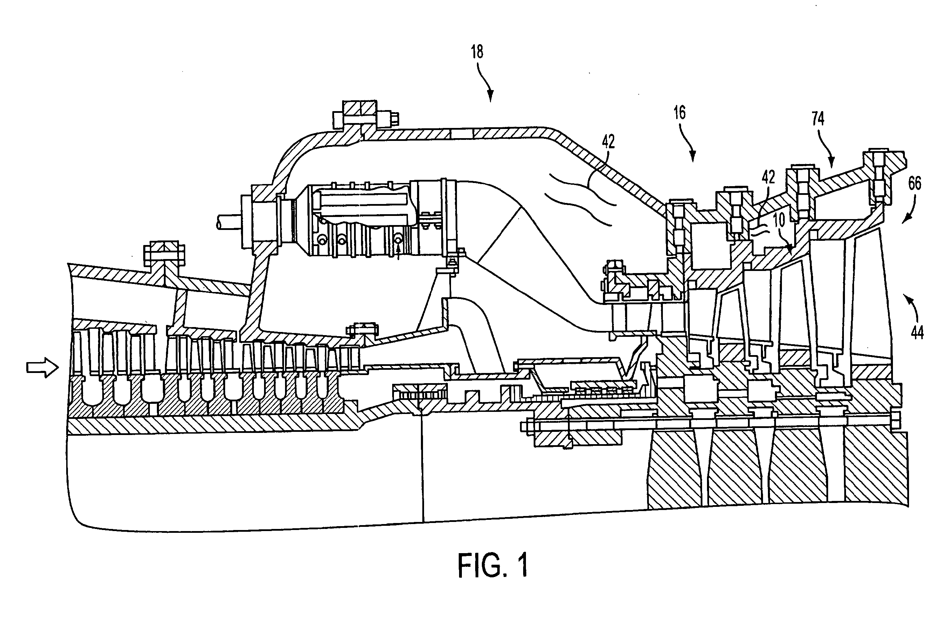

As seen with particular reference to Figures 1 and 2, and as noted above, the outer air seal 10 of the present invention incorporates several boundary members 12 grouped in a ring-shaped arrangement to reduce unwanted leakage of working fluid 44 out of the turbine section 16 of an industrial gas turbine engine 18. More particularly, the boundary members 12 are disposed proximate to, but radially-outward-of the turbine section blades 14. In the present embodiment, the boundary members 12 are identical and located at a uniform radial distance R_{bm} from a central axis 48. It is noted that while the present discussion is directed to an arrangement of uniform boundary members 12, arrangements involving non-uniform boundary members would also suffice.

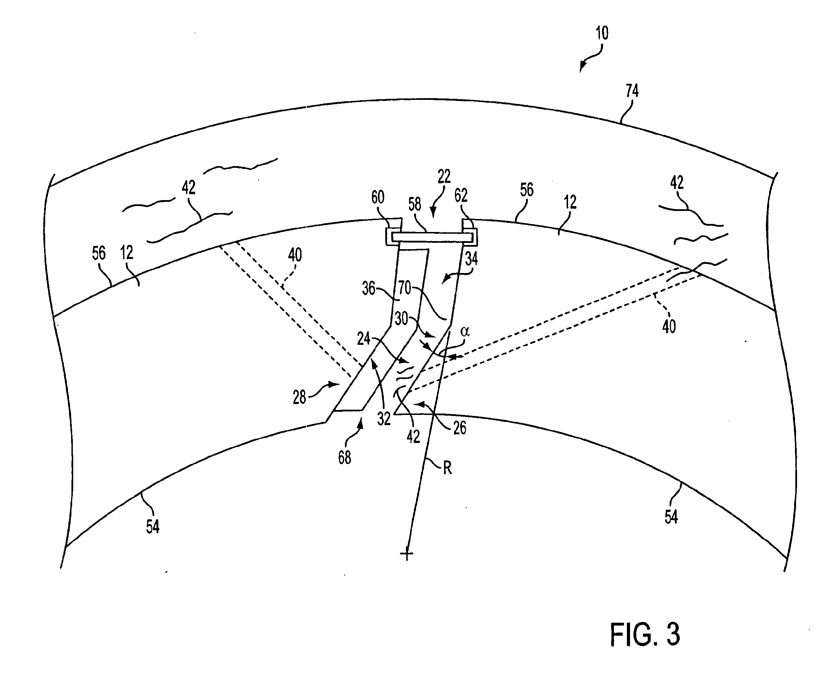

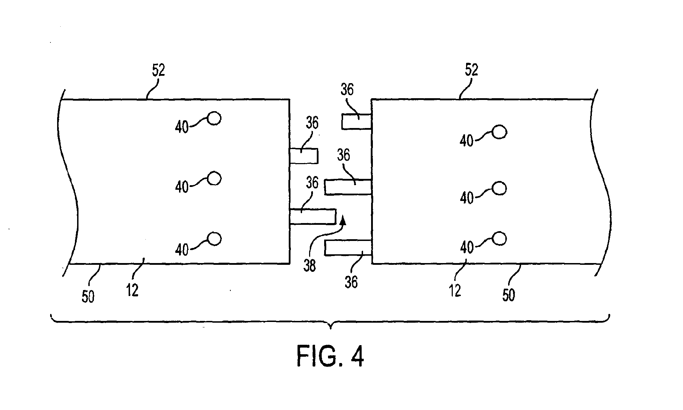

As seen with continued reference to Figure 2, and with additional reference to Figures 3 and 4, the boundary members 12 are essentially-rectangular elements that cooperatively form a substantially-continuous band adapted for encircling a longitudinally-extending region within the turbine section 16. The boundary members 12 include a front edge 50 and a rear edge 52 that each extend between the interface edges 30,32 noted above. The boundary members 12 have a curved cross-section characterized by a radially-inward surface 54, which is oriented toward the engine central axis 48, and an opposite, radially-outward surface 56. The interface edges 30,32 of adjacent boundary members 12 have complementary contours. As noted above, interface edges of adjacent boundary members form interface gaps 22 that allow relative motion, as well as cyclic growth and contraction, of the boundary members during engine operation. The present invention also includes a radially-aligned portion 34 disposed proximate the boundary member radially-outward surface 56. A blocking panel 58 disposed within the interface gap 22 provides a physical barrier that helps prevent unwanted, radially-outward motion of working fluid 44 traveling through the turbine section 16. Blocking panels 58 may be omitted in settings where additional fluid flow obstructions are not desired. Where used, however, the panels 58 may be held in place by a variety of methods, such as notches 60,62 cut into the boundary member interface edges 30,32. Other fixing methods, including welding, brazing, interference fits, and the use of fastening components may also hold the panels 58 in place, if desired. As will be more fully described below, the interface gap 12 of the present invention also provides extended component life by reducing pulse loading of blocking panels 58. Although the radial position of the blocking panels 58 may vary, the panel protection feature described below is most effective when the blocking panel 58 is located radially outward of the radially-skewed portion 24. In this application, the term "radially-skewed" means an orientation that is rotated to be offset from a radial orientation by a desired amount. In the present invention, the radially-skewed portion of the interface gap 22 is offset from radial orientation by an angle α within the range of about fifteen to fifty-five degrees. The radially-skewed portion 24 is proximate the radially-inward surface 54 of the boundary members 12.

With continued reference to Figures 3 and 4, an exemplary interface gap 22 will now be described. The radially-skewed portion 24 of the interface gap 22 is disposed proximate the boundary member radially-inward surface 54 and is characterized by a radially-inward region 68 and a radially-outward region 70. In keeping with various aspects of the invention, the radially-outward region 70 of the radially-skewed portion 24 is located rotationally-upstream of the radially-inward region 68.

During operation, working fluid 44 traveling through the turbine section 16 strikes the turbine blades 14 and imparts rotational motion to the turbine shaft 64. As the turbine shaft 64 spins and the turbine blades 14 continue to rotate, working fluid 44 travels in a substantially-helical path toward the turbine section exit 66, shown in Figure 1.

As the blades 14 rotate, the associated blade tips 72 sweep cyclically past the various interface gaps 22. Working fluid 44 guided by the blade tips 72 is directed toward the boundary members 12 and flows in a pulse-like manner into the interface gaps 22. In the present embodiment, the radially-skewed portion 24 of the interface gap 22 is oriented substantially-perpendicular to the direction (F_{d}) of working fluid 44 guided by the blade tips as it reaches the interface gaps 22. With this arrangement, the radially-skewed portion 24 of the interface gap 22 changes the direction of working fluid 44 pulses, thereby reducing their velocity within the interface gap 22 and lessening the impact upon blocking panels 58 disposed within the gap. This arrangement allows the engine 18 to operate for longer periods before blocking panel 58 replacement is required. It is noted that other configurations of radially-skewed interface gap portions 24 may suffice to redirect the pulse loading tendencies of working fluid 44 being swept into the interface gaps 22, including arrangements in which several angles of inclination are produced within the gap or in which the sections of the skewed portion are aligned with, or only slightly-offset from, the pulses of working fluid.

With reference to Figure 4, the partition members 36 which, as noted above, extend into the interface gaps 22 will now be described. In the invention, the outer air seal 10 of the present invention includes a serpentine-shaped pathway 38 disposed within one or more interface gaps 22; the pathway is formed with partition members 36 that extend from the interface edges 30,32. In the embodiment shown in Figure 4, the partition members 36 are arranged in a substantially-radial alignment and are especially effective to slow longitudinal progress of working fluid 44 through the interface gap 22. As shown in Figure 3, the partition members 36 extend substantially the entire distance between the boundary member radially-inner and radially-outer surfaces 54,56. It is further noted that various combinations (not shown) of partition member 36 alignments may also be used.

With reference to Figures 3 and 4, the cooling fluid conduits 40, which, as noted above, provide a pathway for cooling fluid 42 to enter the interface gaps 22, will now be described. In this embodiment, the outer air seal 10 of the present invention includes cooling fluid conduits 40 that link the interface gap 22 with a source of cooling fluid 42, such as shell air located radially-between the boundary members 12 and the outer boundary 74 of the turbine section 16. With particular reference to Figure 3, the cooling fluid conduits 40 extend from the radially-outward surfaces 56 of the boundary members 12 to the radially-skewed portion 24 of the interface gap 22. With this arrangement, cooling fluid 42 will reach the interface gap 22 and provide supplemental cooling. When used in conjunction with the partition members 36 described above, the cooling fluid conduits 40 bring cooling fluid 42 into a region characterized by relatively-low fluid velocity, thereby ensuring an extended cooling fluid residence time and increasing the cooling effectiveness of the fluid. Additionally, cooling fluid 42 introduced through the radially-skewed portion 24 of the interface gap 22 leaves the interface gap with a rotationally-downstream velocity component and tends to blanket the radially-inward surface 54 of the boundary members 12. With this arrangement, cooling fluid 42 leaving the interface gap 22 provides a cooling film that will not only lower the temperature of the blade tips 72, but will also protect the boundary members 12 from prolonged exposure to extreme temperatures.

Although the boundary members 12 have been described as having interface gaps 22 located between interface edges 30,32 of circumferentially-spaced boundary members 12, the boundary member front and rear edges 50,52 may also be contoured to form interface gaps. With contoured boundary member front and rear edges (not shown), the various features described above may be incorporated into interface gaps (not shown) disposed between sets 20 of boundary members spaced apart axially within an engine 18.

It is to be understood that while certain forms of the invention have been illustrated and described, it is not to be limited to the specific forms or arrangement of parts herein described and shown. It will be apparent to those skilled in the art that various, including modifications, rearrangements and substitutions, may be made without departing from the scope of this invention and the invention is not to be considered limited to what is shown in the drawings and described in the specification. The scope if the invention is defined by the claims appended hereto.

## Claims

1. An outer air seal assembly (10) for reducing leakage proximate a fluid guide component (14) having a predetermined direction of rotation, comprising:
a first boundary member (12) radially spaced apart from a central axis (48) by a predetermined first distance, said first boundary member (12) having a first interface edge (30), an opposite second interface edge (32) and a radially-inward surface (54);
a second boundary member (12) radially spaced apart from said central axis (48) by a predetermined second distance, said second boundary member (12) having a first interface edge (30), an opposite second interface edge (32) and a radially-inward surface (54),
said second boundary member first interface edge (30) and first boundary member second interface edge (32) having complementary contours and being disposed proximate to each other and spaced apart by an interface gap (22) therebetween;
wherein said interface gap (22) includes:
a radially-skewed portion (24) disposed proximate radially inward surfaces (54) and formed by angled portions (26), (28) of cooperating, adjacent interface edges (30), (32) and having a radially-inward region (68) and a radially-outward region (70), said radially-outward region (70) during operation being rotationally-upstream of said radially-inward region (68) and
a radially aligned portion (34) disposed radially outward of the radially skewed portion (24)
the radially skewed portion (24) and radially aligned portion (34) being defined by the complementary contours of the interface edges (30), (32) and **characterised in that** the radially skewed portion (24) offset from a radial orientation by an angle of about fifteen to fiftyfive degrees;
and further **in that** the seal assembly includes a partition member (36) extending substantially the entire distance between the boundary member radially-inward and radially outward surfaces (54,56) and into said interface gap, wherein a serpentine-shaped pathway (38) is formed within said interference gap.

2. The outer air seal assembly of Claim 1, further including a blocking panel (58) disposed within said interface gap.

3. The outer air seal assembly of Claim 2, wherein said blocking panel is disposed within said radially-aligned portion.

4. The outer air seal assembly of Claim 3, wherein said partition member is disposed on said first boundary member.

5. The outer air seal assembly of Claim 3, wherein said partition member is disposed on said second boundary member.

6. The outer air seal assembly of Claim 3, wherein said partition member is oriented in a substantially-radially-aligned manner with respect to said central axis.

7. The outer air seal assembly of Claim 3 wherein said partition member is oriented in a substantially-circumferentially-aligned manner with respect to said central axis.

8. The outer air seal assembly of Claim 1, further including a conduit (40) adapted to fluidly connect a source of cooling fluid (42) to said interface gap, whereby said interface gap is adapted to deliver cooling fluid (42) to a location proximate the radially-inward surface.

9. The outer air seal assembly of Claim 8, wherein said conduit is fluidly connected to said radially-skewed portion.

## Patentansprüche

1. Baugruppe (10) zur Luftabdichtung nach außen zum Reduzieren von Leckagen an einer Fluidführungskomponente (14) mit einer vorgegebenen Drehrichtung, wobei die Baugruppe umfasst:
ein erstes Begrenzungselement (12), das radial mit einem Abstand zu einer Mittelachse (48) in einem vorgegebenen ersten Abstand angeordnet ist, wobei das besagte erste Begrenzungselement (12) eine erste Kontaktfläche (30), eine gegenüberliegende zweite Kontaktfläche (32) und eine radial weiter innen liegende Fläche (54) aufweist;
ein zweites Begrenzungselement (12), das radial mit einem Abstand zu einer Mittelachse (48) in einem vorgegebenen zweiten Abstand angeordnet ist, wobei das besagte zweite Begrenzungselement (12) eine erste Kontaktfläche (30), eine gegenüberliegende zweite Kontaktfläche (32) und eine radial weiter innen liegende Fläche (54) aufweist;
wobei die besagte erste Kontaktfläche (30) des zweiten Begrenzungselements und die zweite Kontaktfläche (32) des ersten Begrenzungselements komplementäre Konturen aufweisen, aneinander angrenzend angeordnet und durch einen Dehnspalt (22) zwischen ihnen mit einem Abstand zueinander angeordnet sind;
wobei der besagte Dehnspalt (22) umfasst:
einen radial schräg verlaufenden Bereich (24), der an den radial weiter innen liegenden Flächen (54) angeordnet ist und
durch die schräg verlaufenden Bereiche (26), (28) der zusammenwirkenden, angrenzenden Kontaktflächen (30), (32) ausgebildet wird, und einen radial weiter innen liegenden Bereich (68) und einen radial weiter außen liegenden Bereich (70) aufweist, wobei der radial weiter außen liegende Bereich (70) während des Betriebs dem radial weiter innen liegenden Bereich (68) in Drehrichtung vorgelagert ist, und
einen radial ausgerichteten Bereich (34), der radial weiter außen als der radial schräg verlaufende Bereich (24) angeordnet ist;
wobei der radial schräg verlaufende Bereich (24) und der radial ausgerichtete Bereich (34) durch die komplementären Konturen der Kontaktflächen (30), (32) definiert sind, **dadurch gekennzeichnet, dass** der radial schräg verlaufende Bereich (24) von einer radialen Ausrichtung um einen Winkel von etwa fünfzehn bis fünfundfünfzig Grad abweicht;
und ferner **dadurch**, dass die Abdichtungsbaugruppe ein Wandungselement (36) umfasst, das sich im Wesentlichen über den gesamten Abstand zwischen den radial weiter innen und den radial weiter außen liegenden Flächen (54, 56) der Begrenzungselemente und in den besagten Dehnspalt erstreckt, wobei ein gewundener Pfad (38) in besagtem Dehnspalt ausgebildet wird.

2. Baugruppe zur Luftabdichtung nach außen nach Anspruch 1, die ferner ein Abschlussblech (58) umfasst, das im besagten Dehnspalt angeordnet ist.

3. Baugruppe zur Luftabdichtung nach außen nach Anspruch 2, wobei besagtes Abschlussblech im besagten radial ausgerichteten Bereich angeordnet ist.

4. Baugruppe zur Luftabdichtung nach außen nach Anspruch 3, wobei besagtes Wandungselement auf besagtem ersten Begrenzungselement angeordnet ist.

5. Baugruppe zur Luftabdichtung nach außen nach Anspruch 3, wobei besagtes Wandungselement auf besagtem zweiten Begrenzungselement angeordnet ist.

6. Baugruppe zur Luftabdichtung nach außen nach Anspruch 3, wobei besagtes Wandungselement relativ zur besagten Mittelachse im Wesentlichen radial ausgerichtet angeordnet ist.

7. Baugruppe zur Luftabdichtung nach außen nach Anspruch 3, wobei besagtes Wandungselement relativ zur besagten Mittelachse in im Wesentlichen umlaufend ausgerichteter Weise angeordnet ist.

8. Baugruppe zur Luftabdichtung nach außen nach Anspruch 1, die ferner einen Durchgang (40) umfasst, der so beschaffen ist, dass er eine Fluidverbindung zwischen einer Quelle für Kühlmittel (42) und besagtem Dehnspalt herstellt, wobei besagter Dehnspalt so beschaffen ist, dass er Kühlmittel (42) an eine Position an der radial weiter innen liegenden Fläche leitet.

9. Baugruppe zur Luftabdichtung nach außen nach Anspruch 8, wobei besagter Durchgang in Fluidverbindung mit besagtem radial schräg verlaufenden Bereich steht.

## Revendications

1. Ensemble formant joint externe d'étanchéité à l'air (10) pour réduire les fuites à proximité d'un composant de guidage de fluide (14) ayant un sens prédéterminé de rotation, comprenant :
un premier organe frontière (12) espacé radialement par rapport à un axe central (48) d'une première distance prédéterminée, ledit premier organe frontière (12) comportant un premier bord d'interface (30), un second bord d'interface opposé (32) et une surface radialement interne (54) ;
un second organe frontière (12) espacé radialement par rapport audit axe central (48) d'une seconde distance prédéterminée, ledit second organe frontière (12) comportant un premier bord d'interface (30), un second bord d'interface opposé (32) et une surface radialement interne (54),
lesdits premier bord d'interface (30) du second organe frontière et second bord d'interface (32) du premier organe frontière ayant des contours complémentaires et étant disposés à proximité l'un de l'autre et espacés l'un par rapport à l'autre par un espace formant interface (22) entre eux ;
ledit espace formant interface (22) comprenant :
une partie inclinée radialement (24) disposée à proximité de surfaces radialement internes (54) et formée par des parties coudées (26), (28) de bords d'interface adjacents, coopérants (30), (32) et comportant une région radialement interne (68) et une région radialement externe (70), ladite région radialement externe (70) étant, en fonctionnement, rotationnellement en amont de ladite région radialement interne (68), et
une partie alignée radialement (34) disposée radialement en dehors de la partie inclinée radialement (24),
la partie inclinée radialement (24) et la partie alignée radialement (34) étant définies par les contours complémentaires des bords d'interface (30), (32) et **caractérisé en ce que** la partie inclinée radialement (24) est décalée par rapport à une orientation radiale d'un angle d'environ quinze à cinquante-cinq degrés ;
et par ailleurs, **en ce que** l'ensemble formant joint d'étanchéité comprend un organe de cloisonnement (36) s'étendant sensiblement sur la distance entière entre les surfaces radialement interne et radialement externe (54, 56) d'organe frontière et dans ledit espace formant interface, un trajet de forme serpentine (38) étant formé dans ledit espace formant interface.

2. Ensemble formant joint externe d'étanchéité à l'air selon la revendication 1, comprenant par ailleurs un panneau de blocage (58) disposé dans ledit espace formant interface.

3. Ensemble formant joint externe d'étanchéité à l'air selon la revendication 2, dans lequel ledit panneau de blocage est disposé à l'intérieur de ladite partie alignée radialement.

4. Ensemble formant joint externe d'étanchéité à l'air selon la revendication 3, dans lequel ledit organe de cloisonnement est disposé sur ledit premier organe frontière.

5. Ensemble formant joint externe d'étanchéité à l'air selon la revendication 3, dans lequel ledit organe de cloisonnement est disposé sur ledit second organe frontière.

6. Ensemble formant joint externe d'étanchéité à l'air selon la revendication 3, dans lequel ledit organe de cloisonnement est orienté d'une manière alignée sensiblement radialement par rapport audit axe central.

7. Ensemble formant joint externe d'étanchéité à l'air selon la revendication 3, dans lequel ledit organe de cloisonnement est orienté d'une manière alignée sensiblement circonférentiellement par rapport audit axe central.

8. Ensemble formant joint externe d'étanchéité à l'air selon la revendication 1, comprenant par ailleurs un conduit (40) adapté pour relier à fluide une source de fluide de refroidissement (42) audit espace formant interface, ledit espace formant interface étant adapté pour amener le fluide de refroidissement (42) à un endroit à proximité de la surface radialement interne.

9. Ensemble formant joint externe d'étanchéité à l'air selon la revendication 8, dans lequel ledit conduit est relié à fluide à ladite partie inclinée radialement.
